# EUROPEAN PATENT APPLICATION

(11) **EP 2 020 796 A1**
(43) Date of publication of application: **04.02.2009**
(21) Application number: 07816887.9
(22) Date of filing: 21.11.2007
(51) Int. Cl.: H04L 29/06

(54) **A METHOD FOR ACCESSING USER DATA AND A USER PROFILE MANAGEMENT SERVER**

(30) Priority: 15.12.2006 CN 200610167277
(71) Applicant: Huawei Technologies Co., Ltd., Shenzhen, Guangdong Province 518129 (CN)
(72) Inventor: SHAO, Gang, Guangdong 518129 (CN); ZHONG, Jieping, Guangdong 518129 (CN); MO, Caiwen, Guangdong 518129 (CN)
(74) Representative: Gulde Hengelhaupt Ziebig & Schneider
(86) International application number: PCT/CN2007/003302
(87) International publication number: WO 2008/071064

(57) **Abstract**

A method for accessing user data and a profile management server (PMS) to resolve the inability of prior arts are disclosed to support both the associated access between user profiles and the distributed data access mechanism. The method for accessing user data includes: a PMS receives an associated data access request message from a requestor, determines a target associated user set after determining that the requestor is allowed to perform associated access to a source user, and converts the associated data access request into a data access request directed to each target associated user; and the PMS authenticates the data access request directed to each target associated user respectively and provides related data according to the authentication result. The PMS includes an authorization rule storage module, a control module, an association processing module and an association storage module.

## Description

This application claims priority to Chinese Patent Application No. 200610167277.9, entitled "Method for Accessing User Data and Profile Management Server" and filed with the Chinese Patent Office on December 15, 2006, which is hereby incorporated by reference in its entirety.

### Field of the Invention

The present invention relates to communication and network technologies, and in particular, to a method for accessing user data and a profile management server.

### Background of the Invention

In the information society, people are using more and more services in networks and more and more personal profile data of the users is distributed in different network entities. As a result, it is more and more complicated to control and manage user profiles, and better security and flexibility are required when all kinds of operations are performed on the profiles for users and services.

User's profile data usually includes the user's preference information, service personalized customization information, terminal capability information and network status information. To quantize and present this information accurately is a prerequisite to further use the information to build new service provisioning, service application and service control modes and realize intelligent and personalized application systems.

With the rapid development of network hardware, broadband and the third generation (3G) networks are able to meet more service requirements and all forms of new services are ever emerging. Generally, services are simultaneously developing along both trends of personalization and socialization. A personalized service serves a user in accordance with the user's preferences. For example, the service interface is in a color that the user prefers, the language the user prefers is used for man-machine interactions, and the presentation of the service is fit for the display capability of the user terminal. These user preferences and service personalized customization information are stored in the user profile to support the operation of the personalized service. A socialized service serves a user without considering the user's profile alone. Instead, the service needs to consider the profile information of other users associated with the user, including users of the same type that have similar features to the user or friends of the user. Likewise, a socialized service needs the support of socialized profile service. For example, the content sequence of a search result is based on the click preferences of users in a certain user group, the contents recommended to a user are the contents that are liked by the closest friend of the user, and the initial service settings of a user are the same as the settings of another user that most resembles the user. User profile management needs the support of an architecture for the above services to meet service requirements.

A first prior art provides a method for accessing and controlling user profiles based on the generic user profile (GUP). According to the method, a profile management server manages all user profiles and provides two basic user data management and access mechanisms, namely, the agent mode and the redirection mode. In the method, a user profile is made up of one or more profile component files. Each profile component may include profile subcomponents or user attribute data items. Profile components may be distributed in different profile storage databases and managed uniformly by one profile management server. The profile management server is the uniform interface for operations on a user profile. All attempts to access or operate data stored in different profile storage databases (including creating user data, reading a certain user data item or modifying a certain user data item) are sent to the profile management server for execution.

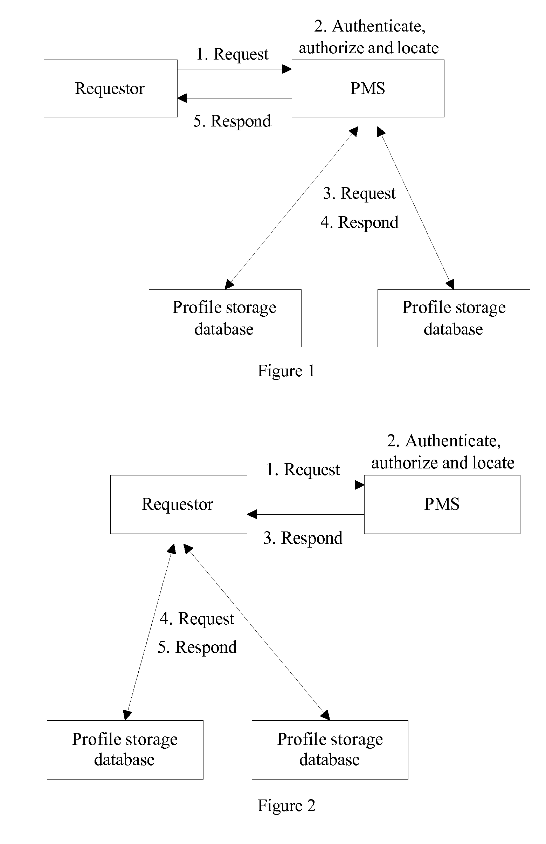

A profile operation procedure in the above agent mode is shown in Figure 1. The procedure includes the following steps:

1. The requestor (a user or a third-party application that wants to access user data) sends a data operation request to the profile management server (PMS).

2. The PMS authenticates the requestor, checks the operation right related to the request, and identifies and locates the user data item.

3. The PMS sends the operation request of the requestor to the profile storage database.

4. The profile storage database executes the operation and returns the result data to the PMS.

5. The PMS responds to the requestor with the return result.

A profile operation procedure in the above redirection mode is shown in Figure 2. The procedure includes the following steps:

1. The requestor (a user or a third-party application that wants to access user data) sends a data operation request to the PMS.

2. The PMS authenticates the requestor, checks the operation right related to the request, and identifies and locates the user data item.

3. The PMS sends an authorization statement and the location information to the requestor.

4. The requestor requests the profile storage database to execute the operation according to the received authorization statement.

5. The profile storage database returns the operation result data to the requestor.

In the foregoing two profile operation procedures, request messages sent to the PMS include:
- Create: create a user profile;
- Delete: delete a user profile;
- Modify: modify a user profile;
- List: list the existing profile items;
- Query: query a user profile;
- Subscribe: subscribe to notification of a profile change; and
- Unsubscribe: unsubscribe from notification of a profile change.

Take a Query request for example. A Query request the requestor sends to the PMS includes a user ID, a requested profile data item, and a requestor ID. The PMS authenticates the requestor ID upon reception of the query request. After the authentication succeeds, the PMS determines whether the requestor has the right to query the requested user data according to the requestor ID, the requested user ID and the profile item, that is, the PMS authorizes the request. Then the PMS locates the requested user data and obtains the information about one or more profile storage databases (profile components or data items with the same user ID may be distributed in different profile storage databases) that store the requested user data. Then, according to the access mode of the request, the PMS either sends a data access request to the data storage database that stores the requested user data, receives the return data value information, and sends the data value information to the requestor in a response message, or the PMS sends an authorization statement to the requestor and the requestor requests data from the profile storage database.

In the foregoing two profile operation procedures, request messages sent to the PMS include:
- Create Component: create a new profile component in the storage database;
- Delete Component: delete a profile component from the storage database;
- List: list the existing profile items;
- Modify: modify data in an existing profile component;
- Read: query data in a user profile;
- Subscribe: subscribe to notification of a data change in a profile component; and
- Unsubscribe: unsubscribe from notification of a data change in a profile component.

Take a Read request for example. A request received by the profile storage database includes a resource ID, the requested data item and the requestor ID, which are encapsulated in a secure authorization statement. Upon reception of the Read request, the profile storage database checks the authorization statement and sends the authorization statement to the PMS that issues the statement for authentication. After the authentication succeeds, the profile storage database searches for the value of the data item that meets the condition according to the resource ID and the requested data item and returns the found value data to the requestor in the form of an extensible markup language (XML) file.

In the process of implementing the present invention, however, the inventor finds that in the first prior art, although the distributed profile of a user is managed by a PMS uniformly, the management of user profiles is independent of each other without considering the association between user profiles. Therefore, the first art does not provide good support for socialized services. It does not enable access to other associated profiles by means of authorizing the access to one profile.

Suppose the following scenario: user u is a user of service A and service A is authorized to access the profile of user u; user v is a friend of user u and service A is not authorized to access the profile of user v. When service A attempts to serve user v via the profile of user u, because service A is not authorized, the access attempt fails. This means service A is unable to provide socialized service for user u. The first prior art does not provide effective support for this profile based associated access mode. But, as socialized services become richer and richer, there will be more and more such application scenarios. Therefore, it is necessary for the PMS to functionally support this profile based associated data access.

According to a second prior art, in a social network application system of today's Internet, registered users can access the data of their friends directly and may access the data of a friend through authorization, and find a best relation path (way of contact) to reach a target user.

In the process of implementing the present invention, however, the inventor finds that the second prior art realizes data access in one management domain by means of friend list and authorization control, without relating to the distributed data access mechanism and therefore, limits the flexibility of data access.

To conclude, the prior arts are unable to support both associated access to user profiles and distributed data access mechanism.

### Summary of the Invention

Embodiments of the invention provide a method for accessing user data and a profile management server to support both the associated access between user profiles and a distributed data access mechanism.

A method for accessing user data includes:

by a profile management server (PMS), receiving an associated data access request message from a requestor, determining a target associated user set after determining that the requestor is allowed to perform associated access to a source user, and converting the associated data access request into a data access request directed to each target associated user; and

by the PMS, authenticating the data access request directed to each target associated user respectively and providing related data according to the authentication result.

A profile management server (PMS) includes:

an authorization rule storage module, adapted to store association authorization rules indicating whether a requestor is allowed to perform associated data access;

a control module, adapted to forward an associated data access request message from the requestor to an association processing module when determining that the requestor is allowed to perform the associated data access according to at least one of the association authorization rules stored in the authorization rule storage module, and instructing provision of related data according to an access authorization statement sent by the association processing module;

the association processing module, adapted to extract an associated data access control list of a source user from an association storage module, determining a target associated user set according to the associated data access control list and a filter parameter carried in the associated data access request message, and convert the associated access request message into data access requests directed to each target associated user; and authenticate the data access requests directed to each target associated user respectively and send an authorization statement to the control module according to the authentication result; and

the association storage module, adapted to store and provide the associated data access control list of users.

In embodiments of the invention, upon reception of an associated data access request of the requestor, the PMS first determines whether the requestor is allowed to perform associated access to the source user. If associated access is allowed, the PMS determines a target associated user set according to the associated access control list of the source user and the filter parameter carried in the associated data access request message, and converts the associated access request into data access requests directed to the target associated users. Then, the PMS authenticates the data access requests directed to the target associated users respectively. Finally, the PMS provides related data according to the authentication result. Therefore, according to embodiments of the invention, not only the associated access between user profiles is supported, but also the distributed data access mechanism is inherited.

### Brief Description of the Drawings

Figure 1 shows a profile operation procedure in the agent mode in a prior art;

Figure 2 shows a profile operation procedure in the redirection mode in a prior art;

Figure 3 shows a procedure where a requestor accesses associated data in an embodiment of the invention;

Figure 4 shows the procedure of a method for accessing user data according to a first embodiment of the invention;

Figure 5 shows the structure of a profile management server according to an embodiment of the invention; and

Figure 6 shows a modular procedure in an embodiment of the invention.

### Detailed Description of the Invention

For the purpose of not only supporting the associated access between user profiles but also inheriting the flexibility of the distributed data access mechanism, an embodiment of the present invention provides a method for accessing user data. First, an associated access control list is generated for each user and stored in a profile management server (PMS); or stored in a profile storage database that trusts the PMS and the PMS may access the associated access control list directly. The associated access control list of a user records the IDs of associated users that can be accessed through the user and the authorization information of each associated user. The authorization information includes the associated data items of an associated user and the access rights to every associated data item. It is also necessary to define the associated access request message and the associated access response message.

The associated access control list may be generated through user setting or generated by a service provider.

Generated through user setting

A user in the system may set an associated access control list which includes a number of user IDs in association with the user and the associated data items authorized by each associated user as well as the access rights. A requestor may obtain the associated user IDs and authorization information in the associated access control list by accessing the user and further access the profile data of the associated users.

The associated access control list is described in Table 1.

**Table 1**

| | | | | | | | | |
|---|---|---|---|---|---|---|---|---|
| User A | | Associated user 1 | Access authority 1 | Associated user 2 | Access authority 2 | ··· ··· | Associated user n | Access authority n |

In Table 1, the ID of user A: Ricky@domain1;

ID of associated user 1: alice@domain1;

Access right: default right to data items: inaccessible;

Name: readable;

MusicPreference: readable;

Alias: editable;

ID of associated user 2: Rose@domain1;

Access right: default right to data items: inaccessible;

Age: inaccessible; and

MusicPreference: readable.

The above Table 1 is only one presentation of the associated access control list. Other forms may be adopted to indicate that a user in association with user A authorizes data items of the user to user A.

Generated by a service provider

The service provider categorizes users according to its rules and generates an associated access control list. The associated access control list includes a number of association types of each user. The associated access control list further includes access rights configured for specific data items of each type and shared by all users and IDs of all associated users in the type (that is, users of one type are mutually associated). In this way, all users of a type can be found via the association type item and further a specific data item of a certain associated user may be accessed through an authentication procedure on the specific data item.

The associated access control list is described in Table 2.

**Table 2**

| | | | | | |
|---|---|---|---|---|---|
| User A | | Association type 1 | Association type 2 | ··· ··· | Association type n |
| | | | | | |
| Association type 1 | | Access authority to specific data items of association type 1 | | Associated user identifier list of association type 1 | |

User A is categorized into association type 1 through to association type n.

Association type 1 includes the following data items:

Age: readable;

Alias: readable;

MusicPreference: editable; and

LanguagePreference: readable.

Associated users belonging to association type 1 include: user A, user B, user C and user D.

The above Table 2 is only a specific presentation of the associated access control list. Other forms may be adopted to indicate the access rights to data items in each type that is defined by the service provider.
• Definitions of the associated access request message and the associated access response message
• The associated access request message is defined in Table 3.

**Table 3**

| **Parameter** | **Description** | **Mandatory/Optional** |
|---|---|---|
| SResource identity | Indicates the source resource identity (identity of the source user), around which profile information of users associated with the user can be queried. | Mandatory |
| AFilter | Filters associated users by specifying either a "requested associated user ID list" or an "association filter parameter". The requested associated user ID list (list of associated user IDs) is a list of IDs of target users to be queried. The AFilter parameter specifies a condition for filtering associated users, including the association levels. Examples of filter conditions are as follows: Level<n; (gets associated users below n levels) Level=n; (gets associated users at the n^{th} level) The default condition is Level=1, indicating associated users at the first level. | Optional |
| Data references | Specifies the data items to be read. | Mandatory |
| Requestor data | Indicates the identity of the requestor, such as a user ID or application ID, serving as an input for authentication and authorization. | Optional |
| Association Type | Indicates the type of the association request, that is, how the requested data is processed before being sent to the requestor, including (effective only in the agent mode): • FullReturn: default mode, to return all requested data of all associated users; and • MainReturn: to return most values of the requested data of the associated users, for obtaining the main data values of users in association with the source user. This mode may be used to recommend applications. | Optional |

• The associated access response message is defined in Table 3.

**Table 4**

| **Parameter** | **Description** | **Mandatory/Optional** |
|---|---|---|
| Data | Indicates the data returned for a query based on data preferences. | Mandatory |
| Redirection data | Indicates the redirection parameter and assertion. | Optional |
| Status | Indicates: 1. The process is executed successfully; 2. The request is redirected; 3. The request fails (the authorization of the access to the source resource fails); or 4. The association fails (access to some associated resources fails). (For the agent mode, Status may be 1, 3, or 4; for the redirection mode, Status may be 2, 3 and 4.) | Mandatory |

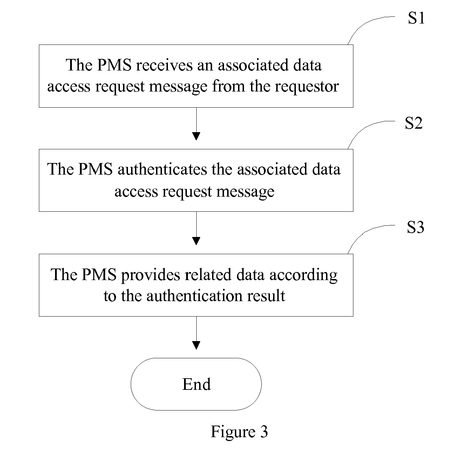

After an associated access control list is stored for each user and the associated access request message and the response message are defined, the procedure for processing an associated data access request is as shown in Figure 3. The procedure includes the following steps:

S1. The PMS receives an associated data access request message from the requestor.

The requestor sends to the PMS an associated data access request message, which carries the mandatory parameters described in Table 3 and some optional parameters described in Table 3.

S2. The PMS authenticates the associated data access request message.

In this step, the PMS first determines whether the requestor is allowed to perform associated access to the source user (including authentication of the requestor identity and authentication of the associated access rights). If the authentication succeeds, the PMS extracts the associated access control list of the source user and determines a set of target associated users according to the filter parameter (see Table 3; the filter parameter is optional and there may be no filter parameter) in the request message and the associated access control list of the source user. Based on different information carried in the filter parameter, there are the following scenarios where the target associated user set is determined:

Scenario 1: A set of user IDs in association with the source user is extracted from the associated access control list of the source user, compare the user ID set with the requested associated user ID list carried in the filter parameter, and get the intersection as the target associated user set.

Scenario 2: A set of user IDs in association with the source user is extracted from the associated access control list of the source user; a set of associated user IDs of the corresponding levels is extracted from the set of user IDs in association with the source user according to the association levels carried in the filter parameter as the target associated user set.

Scenario 3: An associated user ID set is extracted from the associated access control list of the source user stored in a storage device. The extracted set of user IDs in association with the source user is taken as the target associated user set (applicable to circumstances where the filter parameter is absent or not considered).

Afterwards, the associated data access request message is broken down to data access request messages directed to the target associated users in the target associated user set. After the data access request messages directed to the target associated users are authenticated, step S3 is executed.

S3. The PMS provides related data according to the authentication result.

In accordance with the parameters described in Table 4, this step may include:

Scenario 1: The PMS generates an authorization statement according to the authentication result and extracts associated data from the local profile storage database (not limited to one profile storage database) or extracts related data directly from a trusted profile storage database by using the authorization statement; after the PMS obtains the associated data, the PMS generates an association operation response message according to the request type in the data access request so as to return the associated data to the requestor.

Scenario 2: If it is indicated that a redirection is needed, the PMS generates an authorization statement according to the authentication result and sends the authorization statement to the requestor; afterwards, the requestor obtains related associated data from the profile storage database (not limited to one) by using the authorization statement.

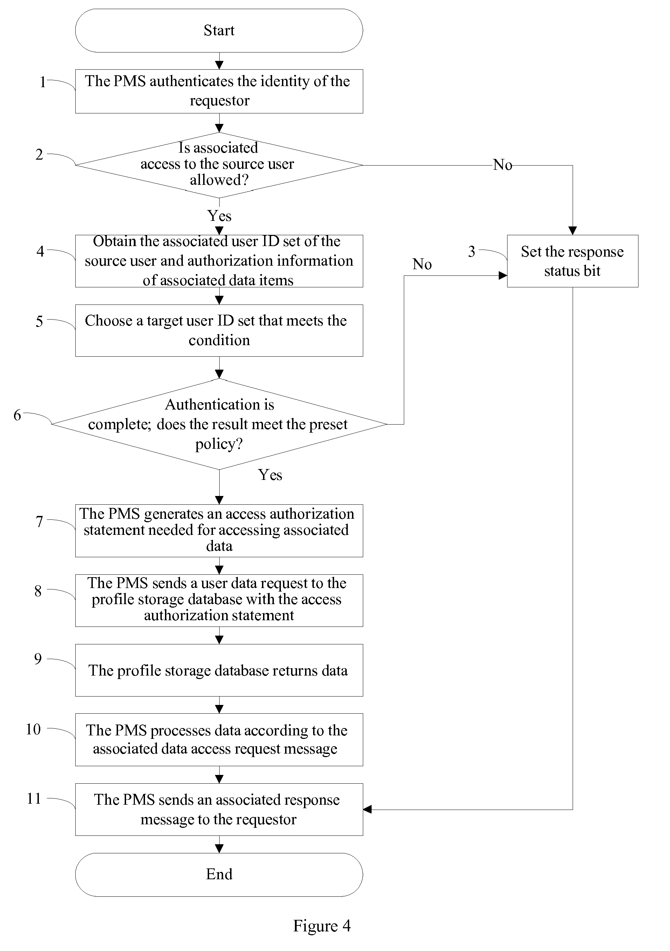

To better explain how the PMS processes an associated data access request message, the following describes the procedure according to a first embodiment of the invention where the PMS returns associated data to the requestor directly after authentication (corresponding to scenario 1 of the above step S3) with reference to Figure 3, Table 3 and Table 4. As shown in Figure 4, the procedure includes the following steps:

1. The PMS authenticates the identity of the requestor. The authentication may be performed inside the PMS or a third-party authentication agency may be requested to authenticate the requestor identity according to the security authentication parameter carried in the associated data access request message (security parameter of the Simple Object Access Protocol (SOAP) if the message is carried over SOAP).

2. The PMS queries the association authorization rule according to the requestor identity and the source user identity in the request message and determines whether the requestor is allowed to perform associated access to the source user. If the requestor is allowed, step 4 proceeds or else step 3 follows. In a specific implementation, the association authorization rule may be: if the source user is not in the friend list of the requestor, it is determined that the requestor is not allowed to perform associated access to the source user; or else, associated access is allowed. For example, the requestor is Ricky@domain1, the accessed object of the source user is the MusicPreference data item of Rose@domain1, and the access mode is read. This indicates that Ricky is allowed to read the MusicPreference of Rose.

3. The Status field of the associated access response message is set to "request failed" and the process proceeds with step 11.

4. The PMS obtains an associated user ID set of the source user and authorization information of associated data items from the associated access control list of the source user.

5. The PMS selects from the associated user ID set a target associated user ID set that meets the filter parameter in the request message.

If the filter condition carried in the request message is an "association filter parameter", the PMS obtains an associated user ID set of the corresponding levels from the associated access control list of the source user according to the association levels in the filter condition (the first level corresponds to associated user IDs of the source user; the second level corresponds to associated user IDs of every associated user of the source user; and so on).

If the filter condition in the request message is a "requested associated user ID list", the PMS first obtains the associated access control list of the source user, and then compares the "requested associated user ID list" in the request message with the obtained associated user ID set of the source user and gets the associated user IDs that meet the condition; that is, the intersection of the two.

If the filter condition in the request message is "null", the PMS takes the user ID set in association with the source user as the target associated user set.

6. The PMS breaks down the associated data access request directed to the source user to data access request messages directed to the target associated users in the target associated user set and performs authentication on data items of the target associated users in the target associated user set according to the associated data authorization information obtained in step 4.

If all the data access request messages directed to the target associated users meet the authorization rule (for example, for a target associated user with five associated data items, it is determined that the authorization rule is met if three or more items are authenticated successfully, or else it is determined that the authorization rule is not met), the PMS determines that the policy preset in the PMS is met and continues with step 7.

If any data access request messages directed to target associated users do not meet the authorization rule, the PMS continues with step 7 if it is determined that the request messages meet the policy preset in the PMS, or else goes back to step 3. For example, if a data access request message directed to a target associated user does not meet the authorization rule, it is determined that the preset policy is not met and step 3 continues; in another example, when over half of the data access request messages directed to target associated users do not meet the authorization rule, it is determined that the preset policy is not met and step 3 continues.

7. The PMS generates an access authorization statement according to the target associated user IDs that meet the authorization rule and the associated data access request message.

8. The PMS sends a user data request to the profile storage database with the access authorization statement.

9. The profile storage database authenticates the request according to the authorization statement and returns the requested data in the response message.

10. After receiving the data from the profile storage database, the PMS processes the data according to the association type in the associated data access request message:

(a) If the association type is FullReturen, the PMS combines multiple data items to one XML item as the Data content in the associated access response message; or

(b) If the association type is MainReturn, the PMS collects the values of multiple user data items and returns the collected result. In the collection process, the PMS selects the data value that appears most frequently among multiple return values as the return data. If there are multiple values that appear the same most frequently, the PMS selects one according to a certain rule (for example, based on the return sequence) as the Data content in the associated access response message.

11. The PMS sends the associated access response message to the requestor.

To better explain how the PMS processes an associated data access request message, the following describes the procedure according to a second embodiment of the invention where redirection is required (corresponding to scenario 1 of the above step S3) with reference to Figure 3, Table 3 and Table 4. The procedure includes the following steps:

Steps 1-7 are the same as those in the first embodiment.

8. The PMS sends an associated access response message to the requestor, the message carrying the authorization statement.

9. The requestor sends a user data request to the profile storage database with the access authorization statement.

10. The profile storage database authenticates the request according to the authorization statement and returns the requested data in a response message according to the association type carried in the request.

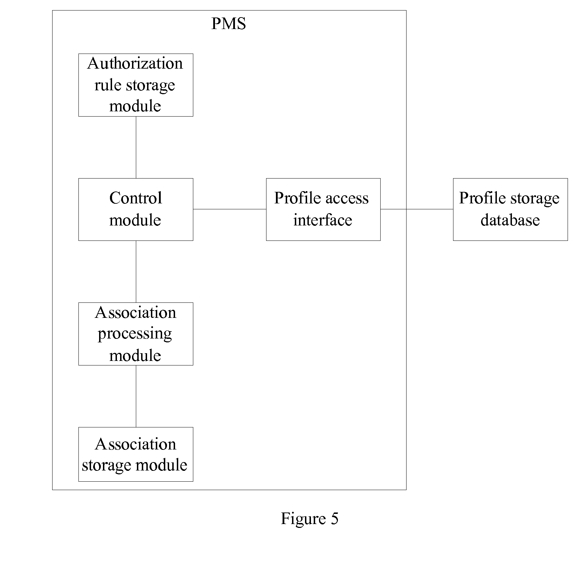

One embodiment of the invention provides a profile management server (PMS). As shown in Figure 5, the PMS includes an authorization rule storage module, a control module, an association processing module and an association storage module that are connected in sequence. Further, when the PMS provides associated data for the requestor directly after authentication, the PMS includes a profile access interface between the control module and the profile storage database.

The authorization rule storage module is adapted to store association authorization rules indicating whether the requestor is allowed to perform associated access. An association authorization rule includes information of the requestor, the source user, the access mode and the association type. For example, the requestor is Ricky@domain1, the accessed object of the source user is the MusicPreference data item of Rose@domain1, and the access mode is read. This indicates that Ricky is allowed to read the MusicPreference of Rose. An example of the association type is: the requestor is Ricky@domain1, the accessed object of the source user is Rose@domain1, and the association type is FullReturn, which indicates that Ricky is allowed to perform associated access to Rose in the FullReturn mode.

The control module is adapted to receive an associated data access request message sent by the requestor, obtain the association authorization rule from the authorization rule storage module after the authentication of the requestor identity succeeds, and determine whether to authorize the requestor to initiate associated access according to the authorization rule; if the requestor is allowed to initiate associated access, the control module forwards the associated data access request message to the association processing module. The control module also interacts with the association processing module after the access authorization and controls the access according to the authorization statement sent by the association processing module, and instructs the provision of related data. The control module instructs the provision of related data in two scenarios. In one scenario, the control module extracts related data from the profile storage database via the profile access interface with the access authorization statement sent by the association processing module and returns the data to the requestor. In the other scenario, the control module forwards the access authorization statement sent by the association processing module to the requestor and instructs the requestor to obtain related data from the profile storage database with the access authorization statement.

The association processing module is adapted to process an associated data access request sent by the control module. The association processing module extracts the associated access control list from the association storage module according to the source user directed by the associated data access request, determines a target associated user set according to the associated access control list and the filter parameter carried in the associated data access request message, and converts the associated data access request message into data access requests directed to the target associated users. Afterwards, the association processing module authenticates the data access requests directed to the target associated users respectively according to authorization information in the associated access control list and the authorization rule and then sends an access authorization statement to the control module according to the authentication result.

The association storage module is adapted to store and provide the associated access control list of a user. This module may be placed in the PMS or exist as a special profile storage database.

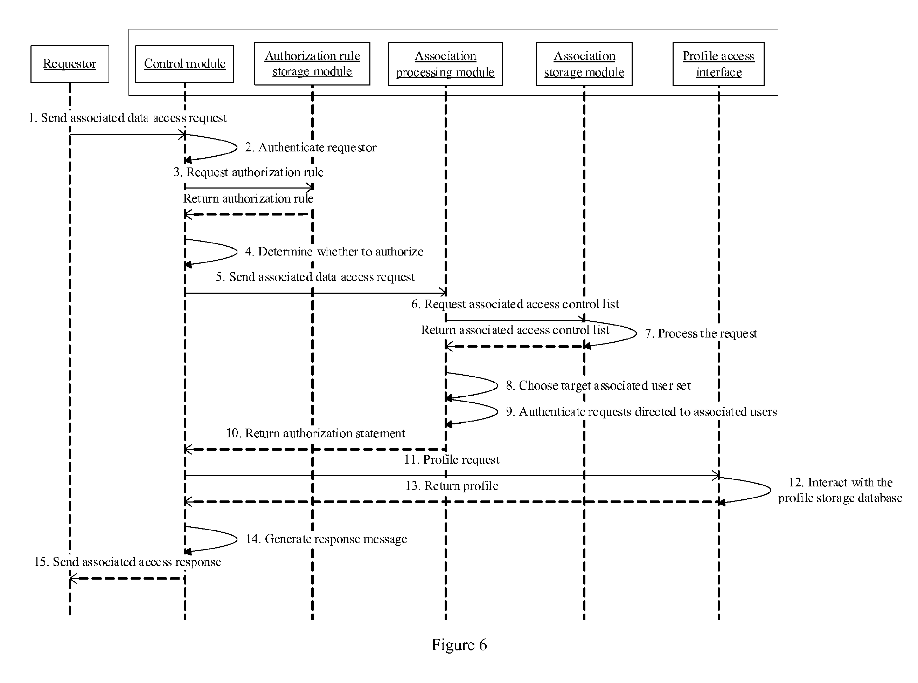

The following describes how the internal modules of the PMS process an associated data access request message in a scenario where the PMS returns associated data to the requestor directly after successful authentication. As shown in Figure 6, the procedure includes the following steps:

1. The control module receives an associated data access request message from the requestor.

2. The control module authenticates the identity of the requestor to determine the identity of the requestor. The authentication may be performed inside the PMS or a third-party authentication agency may be requested to authenticate the requestor identity according to the security authentication parameter carried in the associated data access request message (SOAP security parameter if the message is carried over SOAP).

3. The control module obtains the rule about whether the requestor is authorized to access the source user (the association authorization rule) from the authorization rule storage module.

4. The control module determines whether the requestor is allowed to perform associated access to the source user in the request type according to the authorization rule and continues the processing if the associated access is allowed; or else, the control module sets a response flag bit and sends an associated access response message to the requestor.

5. The control module sends the associated data access request to the association processing module.

6. The association processing module requests the associated access control list of the source user from the association storage module according to the source user identity

7. The association storage module returns the appropriate access control list to the association processing module according to the source user identity, the access control list including an associated user ID set and associated data item authorization information.

8. The association processing module chooses from the associated user ID set a target associated user ID set that meets the filter parameter in the associated data access request message.

If the filter condition carried in the request message is an "association filter parameter", the PMS obtains an associated user ID set of the corresponding levels from the associated access control list of the source user according to the association levels in the filter condition (the first level corresponds to associated user IDs of the source user; the second level corresponds to associated user IDs of every associated user of the source user; and so on).

If the filter condition in the request message is a "requested associated user ID list", the PMS first obtains the associated access control list of the source user, and then compares the "requested associated user ID list" in the request message with the obtained associated user ID set of the source user and gets the associated user IDs that meet the condition; that is, the intersection of the two.

If the filter condition in the request message is "null", the PMS takes the user ID set in association with the source user as the target associated user set.

9. The association processing module breaks down the associated data access request message directed to the source user to data access request messages directed to the target associated users in the target associated user set and authenticates the data access requests directed to the target associated users according to the association authentication information obtained in steps 6 and 7 (for example, for a target associated user with five associated data items, it is determined that the authorization rule is met if three or more items are authenticated successfully, or else it is determined that the authorization rule is not met). If one associated access request does not meet the authorization rule, the association processing module sets the Status field in the associated access response message to "association failed" and continues the processing according to the policy preset in the association processing module or goes to step 15.

10. The association processing module generates an access authorization statement for an authorized data request and sends the statement to the control module.

11. The control module sends a profile request to the profile access interface by using the access authorization statement.

12. The profile access interface interacts with the profile storage database to obtain the user profile data according to the access authorization statement.

13. The profile access interface returns the user profile data to the control module.

14. After obtaining the data returned via the profile access interface, the control module processes the data according to the association type in the request message:

(a) If the association type is FullReturen, the PMS combines multiple data items to one XML item as the Data content in the associated access response message;

(b) If the association type is MainReturn, the PMS collects the values of multiple user data items and returns the collected result. In the collection process, the PMS selects the data value that appears most frequently among multiple return values as the return data. If there are multiple values that appear the same most frequently, the PMS selects one according to a certain rule (for example, based on the return sequence) as the Data content in the associated access response message.

15. The control module sends an associated access response message to the requestor.

In practice, for example, a service that serves a user by means the social feature of the user (may be any existing service with a social feature) provides personalized music service for the user. The current "Music" item in the PMS stores the music types that the user likes. The service may call this user attribute to obtain the music preferences of the user.

Alice is a registered user of this service but has never used any music service, so the Music item in the user profile is null. In this case, the service may send an association request for the music data of Alice to the profile management platform to get the preference data of Music of users in association with Alice while the service may not know which users are associated with Alice and is not authorized to access the profiles of the associated users directly. The profile management platform screens these factors when providing the associated data access service.

In another example, a personalized and socialized search service provides both personalized and socialized search service. A search preference data item exists in the profile of every user. The search service serves users by calling this data item.

When Alice enters a keyword to start a search, the service first requests the personal search preference data of Alice and then requests the search preference data of users in association with Alice (friends or those of the same user type). The service synthesizes these preferences by using a proper algorithm to generate a comprehensive search preference data item and sorts the search result of Alice according to this comprehensive search preference. In this way, both the preferences of Alice and the preferences of the associated users are reflected in the search result.

To conclude, in embodiments of the invention, upon reception of an associated data access request of the requestor, the PMS first determines whether the requestor is allowed to perform associated access to the source user. If associated access is allowed, the PMS determines a target associated user set according to the associated access control list of the source user and the filter parameter carried in the associated data access request message, and converts the associated access request into data access requests directed to the target associated users. Then, the PMS authenticates the data access requests directed to the target associated users respectively. Finally, the PMS provides related data according to the authentication result.

Compared with the first prior art, in embodiments of the invention the association between user profiles is considered and therefore socialized services are supported.

Compared with the second prior art, because a PMS in embodiments of the invention manages user profiles uniformly, the embodiments are not limited to determining the best path to a target user via the association of user profiles. Embodiments of the invention support the distributed data access mechanism, able to access or authorize the access to the profiles of a number of users in association with a user (source user). This means that embodiments of the invention inherit the flexibility of the distributed data access mechanism.

Accordingly, in embodiments of the invention not only the associated access between user profiles is supported, but also the distributed data access mechanism is inherited.

It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for accessing user data, comprising:
by a profile management server (PMS), receiving an associated data access request message from a requestor, determining a target associated user set after determining that the requestor is allowed to perform associated access to a source user, and converting the associated data access request into a data access request directed to each target associated user; and
by the PMS, authenticating the data access request directed to each target associated user respectively and providing related data according to the authentication result.

2. The method of claim 1, wherein the process of determining a target associated user set comprises:
by the PMS, extracting an associated user ID set from an associated access control list of the source user that is stored in a storage device; and
taking the extracted associated user ID set of the source user as the target associated user set.

3. The method of claim 1, wherein the process of determining a target associated user set comprises:
by the PMS, extracting an associated user ID set from an associated access control list of the source user that is stored in a storage device; and
comparing the extracted associated user ID set of the source user with a requested associated user ID list in a filter parameter carried in the associated data access request message and getting an intersection of the two as the target associated user set.

4. The method of claim 1, wherein the process of determining a target associated user set comprises:
by the PMS, extracting an associated user ID set from an associated access control list of the source user that is stored in a storage device; and
extracting an associated user ID set corresponding to an association level from the associated user ID set of the source user as the target associated user set according to the association level in a filter parameter carried in the associated access request message.

5. The method of claim 3 or 4, wherein the associated access control list is generated by user and uploaded to the PMS, the associated access control list comprises: IDs of users in association with the user, associated data items authorized by the associated users, and access rights to the associated data items; or
a service provider classifies users to different association types and generates the associated access control list and stores the associated access control list in the PMS, the associated access control list comprises: association type of each user, specific data items of each type and their access authorization, and IDs of associated users belonging to each association type.

6. The method of any of claims 1-4, wherein the PMS generates an authorization statement according to an authentication result and extracts associated data according to the authorization statement; and the PMS returns associated data to the requestor according to the request type in the associated data access request message.

7. The method of any one of claims 1-4, wherein the PMS generates an authorization statement according to an authentication result and sends the authorization statement to the requestor.

8. A profile management server (PMS), comprising:
an authorization rule storage module, adapted to store association authorization rules indicating whether a requestor is allowed to perform associated data access;
a control module, adapted to forward an associated data access request message from the requestor to an association processing module when determining that the requestor is allowed to perform the associated data access according to at least one of the association authorization rules stored in the authorization rule storage module, and instruct provision of related data according to an access authorization statement sent by the association processing module;
the association processing module, adapted to extract an associated data access control list of a source user from an association storage module, determine a target associated user set according to the associated data access control list and a filter parameter carried in the associated data access request message, and convert the associated access request message to data access requests directed to each target associated user, and authenticate the data access requests directed to each target associated user respectively and send an authorization statement to the control module according to the authentication result; and
the association storage module, adapted to store and provide the associated data access control list of users.

9. The PMS of claim 8, further comprising a profile access interface between the control module and a profile storage database, wherein: the control module extracts related associated data from the profile storage database via the interface by using the access authorization statement from the association processing module and returns the related associated data to the requestor.

10. The PMS of claim 8, wherein the control module forwards the access authorization statement from the association processing module to the requestor.
